# FASCICULE DE BREVET EUROPEEN

(11) **EP 1 780 458 B1**
(45) Date de publication et mention de la délivrance du brevet: **02.04.2014**
(21) Numéro de dépôt: 06291618.4
(22) Date de dépôt: 18.10.2006
(51) Int. Cl.: F16L 11/08

(54) **Tuyau souple de transfert de fluide comprenant une armature de renfort textile tricotée**
Schlauch mit gewirkter Textilbewehrung für Fluidtransfer
Fluid transfer hose having a knitted textile reinforcement layer

(30) Priorité: 25.10.2005 FR 0510863
(43) Date de publication de la demande: 02.05.2007
(73) Titulaire: Hutchinson, 75008 Paris (FR)
(72) Inventeur: Guo, Laina, 45200 Montargis (FR)
(74) Mandataire: Bolinches, Michel Jean-Marie

(56) Documents cités:
- EP-A- 0 374 597
- EP-A- 0 726 416
- EP-A1- 0 370 580
- WO-A1-03/035563
- DE-A1- 19 730 838
- US-A- 3 682 201
- US-A- 4 308 895
- US-A- 4 644 977
- US-A- 4 836 080
- US-A1- 2003 183 970

## Description

L'invention concerne un tuyau souple de transfert de fluide comprenant une armature de renfort textile tricotée, en particulier mais non exclusivement pour un circuit de refroidissement du moteur d'un véhicule automobile.

D'une manière générale, certains tuyaux souples de transfert de fluide sont constitués par deux couches de caoutchouc entre lesquelles vient se placer une armature de renfort textile tricotée, de tels tuyaux étant souvent dénommés tuyaux tricotés. Ce tricot est en grande partie responsable des propriétés mécaniques du tuyau et la nature des fils utilisés est fonction des propriétés finales recherchées en fonction des applications envisagées.

Dans le domaine automobile par exemple, des tuyaux souples de transfert de fluide sont utilisés dans des circuits de refroidissement de moteurs pour véhiculer un mélange d'eau et d'antigel à une température de fonctionnement ou de service de l'ordre de 100 à 125°C et à une pression de quelques bars. Par ailleurs, les constructeurs automobiles imposent aux équipementiers de satisfaire une contrainte supplémentaire concernant le faible coût de ces tuyaux souples. Dans ces conditions, on réalise des tricots avec des fils de viscose ou de polyester par exemple et à faible coût qui satisfont aux contraintes précitées, en particulier une bonne tenue en dynamique sous l'effet des vibrations du moteur.

Cependant, dans les circuits de refroidissement des moteurs, la température de fonctionnement a tendance à augmenter pour passer d'une température de 125°C à une température de l'ordre de 150°C, sachant qu'un tricot à base de viscose ou de polyester (PET ou PEN par exemple) ne résiste pas à une telle augmentation de la température de fonctionnement.

Il faut donc rechercher d'autres matériaux pour réaliser les tricots, et la demanderesse a fait des essais avec des fils choisis dans la famille des polyamides aromatiques, en particulier le polyparaphénylène téréphtalamide (para aramide) ou le polymétaphénylène isophtalamide (méta aramide), ou dans la famille des polyamides aliphatiques, en particulier le polyamide 6,6 (PA 6,6). L'expérience a montré que seuls des tricots réalisés en méta aramide étaient satisfaisants tant en température qu'en tenue en dynamique, mais le coût de fabrication de ces tricots est prohibitif. Des tricots réalisés en para aramide satisfont les contraintes de température mais ont une mauvaise tenue en dynamique du fait de leur trop grande rigidité qui provoque l'apparition d'un phénomène d'abrasion des fils au niveau des noeuds du tricot. En effet, les deux fils en contact à chaque noeud se cisaillent mutuellement lors d'un effort dynamique, ce qui peut conduire à un éclatement des tuyaux. Des tricots réalisés en polyamide 6,6 satisfont également les contraintes thermiques et dynamiques, mais présentent des difficultés de mise oeuvre ou de fabrication liées à leur retrait thermique et à leur gonflement circonférentiel sous une pression trop élevée.

Le document US 4, 836, 080 décrit un tuyau souple selon le préambule de la revendication 1.

Un but de l'invention est de concevoir une armature de renfort textile tricotée qui puisse satisfaire notamment à des contraintes en température et de tenue en dynamique, et être d'un coût de fabrication raisonnable, pour pouvoir être utilisés dans des circuits de refroidissement de moteurs par exemple.

A cet effet, l'invention propose un tuyau souple de transfert de fluide selon la revendication 1.

Selon l'invention, le premier fil rigide est choisi dans la famille des polyamides aromatiques et le second fil moins rigide choisi dans la famille des polyamides aromatiques ou aliphatiques.

A titre d'exemple, le premier fil peut être un polyparaphénylène téréphtalamide (para aramide), et le second fil un polyamide 6,6 (PA 6,6) ou un polyamide 4,6 (PA 4,6).

Selon un autre mode de réalisation, le premier fil peut être un polyparaphénylène téréphtalamide (para aramide) et le second fil un copolymère de paraphénylène téréphtalamide et de 3,4'-oxydiphénylène téréphtalamide (copo aramide).

Un tricot selon l'invention présente notamment les avantages de présenter à la fois une bonne stabilité dimensionnelle, une bonne tenue au vieillissement, une bonne résistance thermique et une bonne résistance dynamique.

D'autres avantages, caractéristiques et détails de l'invention ressortiront du complément de description qui va suivre en référence à des dessins annexés, donnés uniquement à titre d'exemple et dans lesquels :
- la figure 1 est une vue en coupe d'un tuyau souple de transfert de fluide, connu en soi, présentant une armature de renfort textile tricotée ou tricot ;
- la figure 2 est une vue en perspective d'un tricot selon l'art antérieur ; et
- la figure 3 est une vue en perspective d'un tricot selon l'invention.

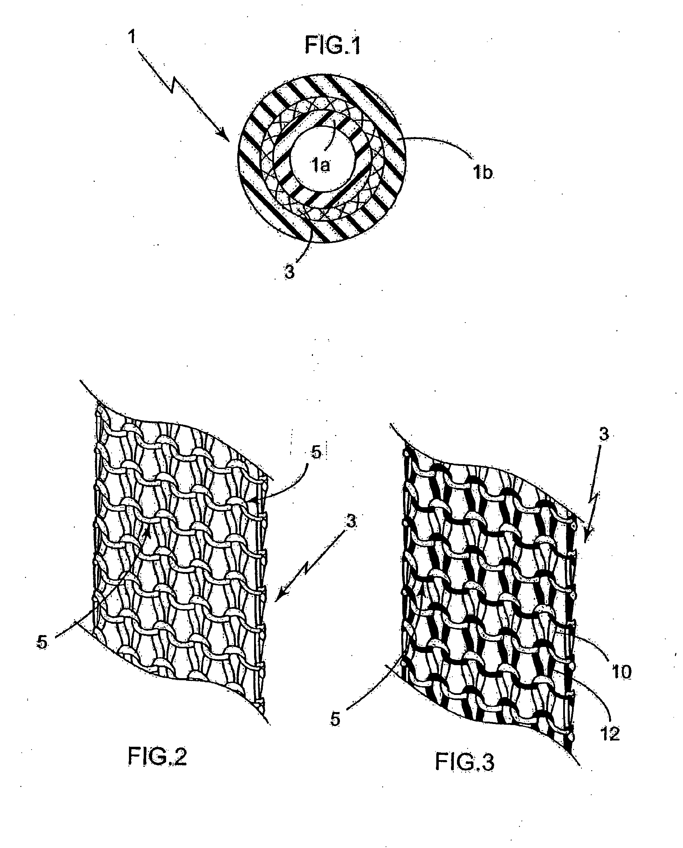

Le tuyau souple 1 de transfert de fluide illustré à la figure 1 est constitué de deux couches de caoutchouc 1 a et 1 b entre lesquelles est placée une armature de renfort textile tricotée ou tricot 3. Les propriétés ou caractéristiques des fils utilisés pour fabriquer le tricot 3 dépendent des applications envisagées.

Dans le cas des circuits de refroidissement d'un moteur de véhicule automobile par exemple le liquide transféré est un mélange d'eau et d'antigel qui doit résister à une température de service ou de fonctionnement pouvant atteindre maintenant une température de l'ordre de 150°C et avoir une bonne tenue en dynamique, notamment sous la sollicitation des vibrations du moteur, pour éviter au tuyau 1 d'éclater.

Le tricot 3 représenté à la figure 2 est un tricot dont le fil est réalisé à partir d'un polyamide aromatique, en particulier un polyparaphénylène téréphtalamide (para aramide), pour illustrer les essais faits par la demanderesse et qui ont été évoqués en préambule. Le tricot 3 forme des noeuds 5 où deux fils en para aramide sont au contact l'un avec l'autre, ce qui conduit à l'apparition d'un phénomène d'abrasion de ces deux fils sous la sollicitation des vibrations du moteur avec un risque d'éclatement du tuyau.

Un tricot 3 selon l'invention tel qu'illustré à la figure 3 présente la particularité d'être mixte et réalisé à partir de deux fils 10 et 12 présentant des caractéristiques différentes mais complémentaires pour satisfaire aux conditions de température et de tenue en dynamique.

Les deux fils 10 et 12 présentent des rigidités différentes et sont tricotés de manière alternée pour former des noeuds mixtes 5 avec un fil 10 rigide en contact avec un fil 12 moins rigide ou plus souple.

Selon l'invention, le premier fil rigide 10 est choisi dans la famille des polyamides aromatiques, et le second fil moins rigide ou plus souple 12 est choisi dans la famille des polyamides aromatiques ou des polyamides aliphatiques. A titre d'exemple de ce premier mode de réalisation, le premier fil 10 est un polyparaphénylène téréphtalamide (para aramide), et le second fil 12 un polyamide 6,6 (PA 6,6) ou un polyamide 4,6 (PA 4,6).

Selon un second mode de réalisation du tricot 3, les deux fils 10 et 12 sont des polyamides aromatiques, le premier fil 10 étant un polyparaphénylène téréphtalamide (para aramide) et le second fil 12 un copolymère de paraphénylène téréphtalamide et de 3,4'-oxydiphénylène téréphtalamide (copo aramide).

A titre d'exemple, la Demanderesse a effectué des essais dynamiques sur plusieurs tricots suivant un test dit PVT (Pression Vibration Température) effectué dans les conditions suivantes : une pression de 0 à 2 bars, une température du fluide de l'ordre de 115°C, une amplitude de débattement de ± 15mm et une durée de 250 heures.

Le résultat de ces essais est résumé dans le tableau ci-dessous avec un tricot 3 réalisé avec des fils de polyester en PET (polyéthylène téraphtalate) et en PEN (polynaphtalate d'éthylène), des fils en polyamide 6.6 (PA 6.6), des fils en para-aramide, et des fils mixtes selon le premier mode de réalisation de l'invention avec un premier fil 10 en polyparaphénylène téréphtalamide et un second fil 12 en polyamide 6.6.

| **TRICOT** | **PET** | **PEN** | **PA 6.6** | **PARA ARAMIDE** | **INVENTION** |
|---|---|---|---|---|---|
| PVT Tuyau non vielli | BON | BON | BON | MAUVAIS | BON |
| PVT après vieillissement 500h/125°C | BON | - | - | - | BON |
| PVT après vieillissement 400h/140°C | MAUVAIS | MAUVAIS | BON | - | BON |
| Fabrication du tuyau | BON | BON | MAUVAIS | BON | BON |

Il ressort de ce tableau que seul un tricot 3 selon l'invention répond d'une manière satisfaisante à l'ensemble des tests effectués.

## Revendications

1. Tuyau souple de transfert de fluide comprenant au moins une armature de renfort textile sous la forme d'un tricot (3) présentant des noeuds, le tricot (3) étant réalisé à partir de deux fils (10, 12) ayant des rigidités différentes, de manière à former des noeuds mixtes (5) qui sont chacun constitués d'un premier dit fil rigide (10) et d'un second dit fil (12) moins rigide tricotés de manière alternée en contact l'un avec l'autre, **caractérisé en ce que** le premier fil rigide (10) est choisi dans la famille des polyamides aromatiques et le second fil (12) moins rigide est choisi dans la famille des polyamides aromatiques ou aliphatiques.

2. Tuyau selon la revendication 1, dans lequel le premier fil (10) est un polyparaphénylène téréphtalamide (para aramide) et le second fil (12) un polyamide 6,6 (PA 6,6).

3. Tuyau selon la revendication 1, dans lequel le premier fil (10) est un polyparaphénylène téréphtalamide (para aramide) et le second fil (12) un copolymère de paraphénylène téréphtalamide et de 3,4'-oxydiphénylène téréphtalamide (copo aramide).

## Patentansprüche

1. Schlauch für den Fluidtransport, mit mindestens einer textilen Verstärkungsbewehrung in Form eines Strickgewebes (3) mit Knoten, wobei das Strickgewebe (3) ausgehend von zwei Fäden (10, 12) mit unterschiedlichen Steifigkeiten hergestellt ist, so dass gemischte Knoten (5) gebildet sind, die jeweils aus einem ersten Faden (10), der steifer Faden genannt wird, und aus einem zweiten Faden (12), der Faden mit geringerer Steifigkeit genannt wird, bestehen, welche abwechselnd in Kontakt miteinander verstrickt sind, **dadurch gekennzeichnet, dass** der erste, steife Faden (10) aus der Familie der aromatischen Polyamide und der zweite Faden (12) mit geringerer Steifigkeit aus der Familie der aromatischen oder aliphatischen Polyamide ausgewählt ist.

2. Schlauch nach Anspruch 1, bei dem der erste Faden (10) ein Polyparaphenylen-Terephthalamid (para-Aramid) und der zweite Faden (12) ein Polyamid 6,6 (PA 6,6) ist.

3. Schlauch nach Anspruch 1, bei dem der erste Faden (10) ein Polyparaphenylen-Terephthalamid (para-Aramid) und der zweite Faden (12) ein Copolymer aus Paraphenylen-Terephthalamid und 3,4'-Oxydiphenylen-Terephthalamid (copo-Aramid) ist.

## Claims

1. Flexible fluid transfer hose comprising at least one textile reinforcement layer in the form of a knitted fabric (3) having knots, the knitted fabric (3) being produced from two threads (10, 12) having different rigidities so as to form mixed knots (5) each of which is composed of a first, rigid said thread (10) and of a second, less rigid said thread (12) which are knitted in an alternate manner in contact with one another, **characterised in that** the first, rigid thread (10) is chosen from the family of the aromatic polyamides and the second, less rigid thread (12) is chosen from the family of the aromatic or aliphatic polyamides.

2. Hose according to claim 1, wherein the first thread (10) is a polyparaphenylene terephthalamide (para-aramid) and the second thread (12) is a polyamide 6,6 (PA 6,6).

3. Hose according to claim 1, wherein the first thread (10) is a polyparaphenylene terephthalimide (para-aramid) and the second thread (12) is a copolymer of paraphenylene terephthalamide and 3,4'-oxydiphenylene terephthalimide (copo-aramid).
